# EUROPEAN PATENT SPECIFICATION

(11) **EP 2 733 668 B1**
(45) Date of publication and mention of the grant of the patent: **02.01.2019**
(21) Application number: 13192637.0
(22) Date of filing: 13.11.2013
(51) Int. Cl.: G06T 7/00, G06T 7/20, G06T 7/77, F41G 3/14, G01S 3/784

(54) **System and method for detecting shooting position**
System und Verfahren zur Erkennung einer Schussposition
Système et procédé de détection de position de tir

(30) Priority: 15.11.2012 KR 20120129782
(43) Date of publication of application: 21.05.2014
(73) Proprietor: Hanwha Land Systems Co., Ltd., Seongsan-gu, Changwon-si Gyeongsangnam-do (KR)
(72) Inventor: Heo, Man-Jung, Kyongsangnam-do (KR); Kim, Byoung-Hee, Kyongsangnam-do (KR)
(74) Representative: Boult Wade Tennant LLP

(56) References cited:
- US-A- 5 456 157
- US-A1- 2010 027 840
- US-B1- 6 496 593
- US-B1- 6 621 764
- US-B1- 8 134 889

## Description

### BACKGROUND OF THE INVENTION

### 1. Field of the Invention

The present invention relates to a shooting position detection system, and more particularly, to a system of detecting an area with high brightness from an image and determining that area as a shooting position.

### 2. Description of the Related Art

In a general system for returning fire at an enemy, when shots are fired from an enemy camp, our troops directly take aim at a position where shots were fired from the enemy camp and fire their guns at that position.

In this manner, a plurality of users of firing devices is necessary, it is highly dangerous, and it is difficult to quickly fire back in response to shootings that occur repetitively at the same place. To overcome such limitations, a system for automatically shooting at a fixed target position or a system for automatically shooting at a position detected by using infrared rays is disclosed.

However, a method of automatically shooting at a fixed target position is useless when the target position is no longer fixed, and a method of automatically shooting at an area detected by using infrared rays requires the use of a thermal imaging camera, which results in additional expenses.

US 6 496 593 B1 describes a system for remote detection of muzzle blasts produced by rifles, artillery and other weapons, and similar explosive events. The system includes an infrared camera, image processing circuits, targeting computation circuits, displays, user interface devices, weapon aim point measurement devices, confirmation sensors, target designation devices and counterfire weapons. The camera is coupled to the image processing circuits. The image processing circuits are coupled to the targeting location computation circuits. The aim point measurement devices are coupled to the target computation processor. The system includes visual target confirmation sensors which are coupled to the targeting computation circuits.

US 2010/027840 A1 describes a system and method of processing infrared imagery to determine projectile trajectories and the locations of shooters with a high degree of accuracy. The method includes image processing infrared image data to reduce noise and identify streak-shaped image features, using a Kalman filter to estimate optimal projectile trajectories, updating the Kalman filter with new image data, determining projectile source locations by solving a combinatorial least-squares solution for all optimal projectile trajectories, and displaying all of the projectile source locations. Such a shooter-localization system is of great interest for military and law enforcement applications to determine sniper locations, especially in urban combat scenarios.

### SUMMARY OF THE INVENTION

The present invention provides a system detecting a position having brightness of a reference value or higher from an image as a shooting position, and particularly, detecting the shooting position based on a correlation between a present frame and a previous frame in brightness by considering a case in which the shooting position changes, thereby more precisely detecting the shooting position.

According to an aspect of the present invention, there is provided a detection system for determining a shooting position of a gun defined in claim 1.

In the present embodiment, when there are a plurality of shooting positions, the shooting position determination unit may determine priority of the shooting positions.

In the present embodiment, the shooting position determination unit may determine the priority of the shooting positions in order of great brightness values, detected by the second block detection unit.

The shooting position detection system may further include an error compensation detection unit designating a block area outside of the plurality of block groups in the image of the present frame as an error block area and checking whether a block whose brightness is a reference value or higher exists in the error block area.

In the present embodiment, when a viewing angle is 7 degrees or more, the error compensation detection unit may check the error block area and determine that camera shake exists when the block whose brightness is the reference value or higher exists in the error block area. When the viewing angle is less than 7 degrees, the error compensation detection unit may not checks the error block area (for example, the error detection unit may skip checking the error block area).

In the present embodiment, the block determination part may include a meta-block determination unit dividing the image into a predetermined meta-blocks and a sub-block determination unit dividing a certain one of the meta-blocks into a predetermined number of sub-blocks.

According to another aspect, there is provided a shooting position detection system including a meta-block determination unit dividing an image into a predetermined number of meta-blocks, a brightness calculation part calculating brightness of the meta-blocks and designating one of the meta-blocks, whose brightness is a reference value or higher, as a search target block, a sub-block determination unit dividing the search target block into a predetermined number of sub-blocks, and a shooting position determination unit, when the brightness calculation part calculates brightness of the sub-blocks and detects one of the sub-blocks, whose brightness is a reference value or higher, registering the detected sub-block as a shooting position.

In the present embodiment, when there are a plurality of shooting positions, the shooting position determination unit may determine priority of the shooting positions.

The shooting position detection system may further include an error compensation detection unit designating a block area broader than the plurality of block groups in the image of the present frame as an error block area and checking whether a block whose brightness is a reference value or higher exists in the error block area.

There is also provided a shooting position detection system including a search range determination unit obtaining a viewing angle of a present camera and determining a search range to detect a flame in one frame with reference to the viewing angle, a preliminary search unit detecting a search range including a pixel whose brightness is a reference value or higher among pixels of an image, a secondary search unit increasing the search range, detected by the preliminary search unit, to be twice and detecting a pixel whose brightness is the reference value or higher among pixels excluding the pixel detected by the preliminary search unit, and a shooting position determination unit obtaining and recording a center point of the pixels detected by the secondary search unit in a database and recording a size of a group of the detected pixels in the database.

According to yet another aspect of the present invention, there is provided a method of detecting a shooting position of a gun defined in claim 9.

In the present embodiment, in the determining the shooting position, when there are a plurality of shooting positions, priority of the shooting positions may be determined.

In the present embodiment, in the determining the shooting position, the priority of the shooting positions may be determined in order of great brightness values, detected by the secondary block detection unit.

The method may further include designating a block area outside of the plurality of block groups in the image of the present frame as an error block area and checking whether a block whose brightness is a reference value or higher exists in the error block area.

In the present embodiment, when the viewing angle is 7 degrees or more, in designating the error block area, it may be determined that a camera shake exists when the block whose brightness is the reference value or higher exists in the error block area. Checking the error block area may be skipped when the viewing angle is less than 7 degrees.

In the present embodiment, the dividing the image into the predetermined number of blocks may include dividing the image into a predetermined number of meta-blocks, and dividing a certain one of the meta-blocks into a predetermined number of sub-blocks.

According to a further aspect, there is provided a method of detecting a shooting position, the method including dividing an image into a predetermined number of meta-blocks, designating one of the meta-blocks, whose brightness is a reference value or higher, as a search target block by calculating brightness of the meta-blocks, dividing the search target block into a predetermined number of sub-blocks, and detecting one of the sub-blocks, whose brightness is a reference value or higher, by calculating brightness of the sub-blocks and then registering the detected sub-block as the shooting position.

In the present embodiment, in the registering the detected sub-block as the shooting position, when there are a plurality of shooting positions, priority of the shooting positions may be determined.

The method may further include designating a block area broader than the plurality of block groups in the image of the present frame as an error block area and checking whether a block whose brightness is a reference value or higher exists in the error block area.

There is also described a shooting position detection system comprising: a meta-block determination unit dividing an image into a predetermined number of meta-blocks; a brightness calculation part calculating brightness of the meta-blocks and designating one of the meta-blocks having brightness of a reference value or higher, as a search target block; a sub-block determination unit dividing the search target block into a predetermined number of sub-blocks; and a shooting position determination unit, which, when the brightness calculation part calculates brightness of the sub-blocks and detects one of the sub-blocks having brightness of the reference value or higher, registers the detected sub-block as a shooting position.

There is also described a shooting position detection system comprising: a search range determination unit obtaining a viewing angle of a present camera and determining a search range to detect a flame in one frame of an image with reference to the viewing angle; a preliminary search unit detecting a search range including a pixel whose brightness is a reference value or higher among pixels of the image; a secondary search unit increasing the detected search range to be double in size and detecting among the pixels of the image and excluding the pixel detected by the preliminary search unit, other pixels whose brightness is the reference value or higher; and a shooting position determination unit obtaining a pixel which has the highest brightness as a shooting position.

When there are a plurality of shooting positions, the shooting position determination unit may determine priority of the shooting positions.

There is also described a method of detecting a shooting position, the method comprising: dividing an image into a predetermined number of meta-blocks; calculating a brightness of the meta-blocks and designating one of the meta-blocks having brightness of a reference value or higher, as a search target block; dividing the search target block into a predetermined number of sub-blocks; and calculating a brightness of the sub-blocks and detecting one of the sub-blocks having brightness of a reference value or higher, and then registering the detected sub-block as the shooting position.

### BRIEF DESCRIPTION OF THE DRAWINGS

The above and other features and advantages of the present invention will become more apparent by describing in detail exemplary embodiments thereof with reference to the attached drawings in which:
FIG. 1 is a view illustrating the entire configuration of a shooting system including a shooting position detection system 100 according to an embodiment of the present invention;
FIG. 2 is a view illustrating an inner configuration of the shooting position detection system 100 according to an embodiment of the present invention;
FIG. 3 is a view illustrating a result of dividing an image by a block determination part 110 according to an embodiment of the present invention;
FIGS. 4A to 4C are views illustrating examples of preliminary block detection and secondary block detection according to an embodiment of the present invention;
FIG. 5 is a flowchart illustrating a method of detecting a shooting position according to an embodiment of the present invention;
FIG. 6 is a flowchart illustrating a method of detecting a shooting position according to another embodiment of the present invention; and
FIG. 7 is a flowchart illustrating shooting position detection to compensate for camera shake according to another embodiment of the present invention.

### DETAILED DESCRIPTION OF THE INVENTION

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art. In the drawings, the thicknesses of layers and regions are exaggerated for clarity. Like reference numerals in the drawings denote like elements, and thus their description will be omitted.

Hereinafter, the present invention will be described in detail by explaining preferred embodiments of the invention with reference to the attached drawings.

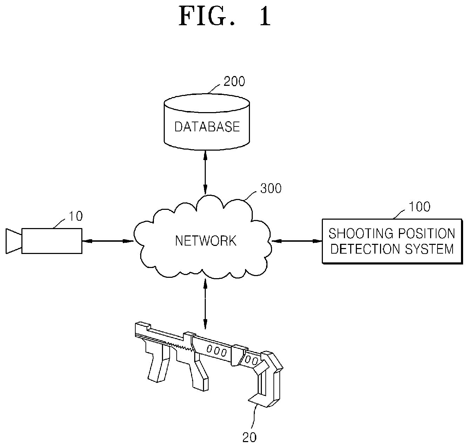

FIG. 1 is a view illustrating the entire configuration of a shooting system including a shooting position detection system 100 according to an embodiment of the present invention;

Referring to FIG. 1, the entire shooting system may include a plurality of monitoring cameras 10, a shooting device 20, the shooting position detection system 100, and a network 300.

The plurality of monitoring cameras 10 may transmit and receive data to and from the shooting position detection system 100 via the network 300. The monitoring camera 10 may be provided in a plurality thereof.

The monitoring camera 10 obtains an external image and provides the image to the shooting position detection system 100 to allow the shooting position detection system 100 to obtain a shooting position. In the present embodiment, the shooting position detection system 100 may obtain a target shooting position by using image processing to analyze brightness of the image transmitted from the monitoring camera 10. For this, the monitoring camera 10 may obtain external images of suspected shooting positions, and a viewing angle may be controlled by a setting of a user.

The shooting position detection system 100 obtains images from the monitoring system 10, analyzes brightness of a plurality of blocks or pixels, and then detects a shooting position. In the present embodiment, the shooting position detection system 100 may use brightness information of a previous frame to precisely detect the shooting position.

Generally, since a flame appears at a muzzle of a gun when the gun is fired, when analyzing an image at the time of shooting, it may be known that brightness increases at a shooting position. In the present embodiment, a position with high brightness in the image is determined as the shooting position by analyzing the image by using these properties. A detailed configuration of the shooting position detection system 100 will be described below.

Also, the shooting position detected by the shooting position detection system 100 may be stored in a database 200 via a communication network. Information stored in the database 200 may include not only a final shooting position but a size of the shooting position and a transfer of the shooting position. Additionally, when the shooting position is in a plurality thereof, the database 200 may store priority of the plurality of shooting positions. Also, the database 200 may communicate with the shooting position detection system 100 via the network 300 and may be included in the shooting position detection system 100.

On the other hand, in the present embodiment, the database 200 may include a computer-readable recording medium and may be not only a narrow database but also an extended database including data records based on a filing system. A simple set of logs may be used as the database 200 when it is possible to extract data by searching the same.

The shooting device 20 receives data from the shooting position detection system 100 and shoots at a determined shooting position when the user gives a command.

The network 300 may include one or more devices to allow communications with the shooting position detection system 100, the monitoring cameras 10, shooting equipment, and the database 200 via a wired/wireless communication network. Otherwise, the network 300 may provide different protocols to the device allowing the communication.

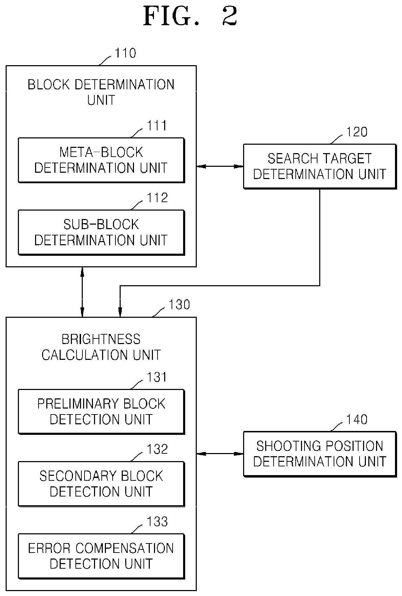

FIG. 2 is a view illustrating an inner configuration of the shooting position detection system 100.

Referring to FIG. 2, the shooting position detection system 100 may include a block determination unit 110, a search target determination unit 120, a brightness calculation unit 130, a preliminary block detection unit 131, a secondary block detection unit 132, an error compensation detection unit 133, and a shooting position determination unit 140.

The shooting position detection system 100 divides an image into a plurality of blocks and determines a block having brightness of a reference value or higher as a shooting position. When the block is large in size, a detailed shooting position may be detected by dividing the corresponding block into sub-blocks. When the number of pixels in an image is small, instead of dividing the image into blocks, brightness values of the pixels are calculated, thereby determining a position of a pixel as a shooting position if the pixel has a brightness of a reference value or higher. Hereinafter, throughout the specification, a block may be replaced by a pixel depending on a size and resolution of an image.

The block determination unit 110 divides an obtained image into a predetermined number of blocks. The block determination unit 110 may include a meta-block determination unit 111 and a sub-block determination unit 112.

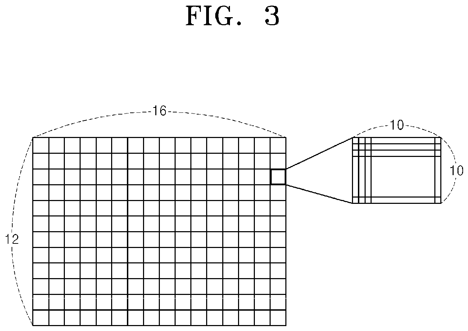

FIG. 3 is a view illustrating a result of dividing an image by the block determination unit 110 according to an embodiment of the present invention.

The meta-block determination unit 111 may divide a corresponding image into large blocks. In the present embodiment, the meta-block determination unit 111 may divide an image of one frame into 16×12 blocks. In this case, a block from the divided image is designated as a meta-block.

Referring to FIG. 3, the meta-block determination unit 111 divides one image into 16×12 square blocks and one square block becomes one meta-block.

Also, the sub-block determination unit 112 divides one meta-block into a plurality of blocks. In the present embodiment, the sub-block determination unit 112 may divide one meta-block into 10x10 blocks, and one of the blocks from the divided meta-block may be designated as a sub-block.

Referring to FIG. 3, the sub-block determination unit 112 divides the one meta-block into 10x10 sub-blocks. The sub-block determination unit 112 does not divide all meta-blocks into sub-blocks but divides only detected meta-blocks into sub-blocks, the meta-block being detected by one of a preliminary block detection unit 131 or a secondary block detection unit 132.

A brightness calculation part 130 calculates brightness of blocks (meta-blocks and sub-blocks) resulting from the block determination unit 110 and detects blocks having brightness of a reference value or higher. The brightness calculation part 130 detects meta-blocks having brightness of a reference value or higher by calculating brightness of the meta-blocks and then designates the detected meta-blocks as search target blocks.

When the sub-block determination unit 112 divides the search target block into sub-blocks, the brightness calculation part 130 detects a sub-block having brightness of a reference value or more by calculating brightness of the sub-blocks. In this case, a reference value of brightness applied to sub-blocks may be higher than a reference value of brightness applied to meta-blocks.

Next, a shooting position determination unit 140 determines positions of the sub-block detected by the brightness calculation part 130 as shooting positions. That is, the shooting position determined by the shooting position determination unit 140 is a position of a sub-block having brightness of the reference value or higher in a size of a unit sub-block. As described above, since the position of the sub-block having brightness of the reference value or higher is more likely to be a position where shots are fired by the opponent, the shooting position determination unit 140 determines the position of the sub-block having brightness of the reference value or higher as a shooting position to shoot at in response thereto.

When a plurality of sub-blocks having brightness of the reference value or higher exists, the shooting position determination unit 140 may prioritize to determine the shooting position. For example, the shooting position determination unit 140 may prioritize shooting positions in order of brightness. Otherwise, a position dense with a plurality of sub-blocks having brightness of the reference value or higher may be determined with higher priority.

On the other hand, according to another embodiment of the present invention, a shooting position may be precisely detected by using a correlation between a present frame and a previous frame. The brightness of an image may increase instantaneously due to a reflection by a certain object or an effect of sunlight although a shooting does not occur. Accordingly, although a block having brightness of the reference value or higher is detected from the present frame, to precisely detect the shooting position distinguished from the above, the shooting position is detected by using the correlation between the previous frame and the present frame.

In this case, considering the brightness of the previous frame, although shootings occur while positions thereof are moving, it is possible to obtain movement information and to compensate for an error occurring due to a viewing angle in which an image is obtained.

In the present embodiment, the brightness calculation unit 130 may include the preliminary block detection unit 131 and the secondary block detection unit 132.

The preliminary block detection unit 131 detects a block having brightness of the reference value or higher from an image of the previous frame, and the secondary block detection unit 132 detects a block having brightness of the reference value or higher from an image of the present frame.

The preliminary block detection unit 131 detects a suspected block having brightness with the reference value or higher from the image of the previous frame. The image of the previous frame may be an image right before the present frame, or considering a movement speed of a target to be shot, may be an image several frames therebefore.

Next, the secondary block detection unit 132 determines a plurality of block sets including suspected blocks detected by the preliminary block detection unit 131, from the image of the present frame and detects a block having brightness of a reference value or higher, from the determined block sets. The suspected block having brightness of the reference value or higher that is detected by the preliminary block detection unit 131 from the image of the previous frame may exist in a plurality thereof. Among these, blocks having brightness of the reference value or higher and existing in the image of the present frame become real shooting positions.

In this case, the secondary block detection unit 132 may search a block area in a wider range than an area of the suspected blocks. This is for compensating an error in which the shooting position changes in comparison with the previous frame due to movement of the target to be shot. In the present embodiment, the secondary block detection unit 132 may search brightness values of blocks located in block areas further including a certain number of blocks in suspected block positions.

When a block having the brightness of the reference value or higher is not detected in the block area including the suspected blocks by the secondary block detection unit 132, the suspected blocks may be determined not to be a shooting position, but may be determined to be temporarily changed in brightness. On the contrary, when a block having the brightness of the reference value or higher is detected in the block area including the suspected blocks by the secondary block detection unit 132, the suspected blocks may be determined to be precise shooting start positions.

The shooting position determination unit 140 determines that a position of the suspected block detected by the preliminary block detection unit 131 is a shooting start position and determines that a position of the block having brightness of the reference value or higher that is detected by the secondary block detection unit 132 is a shooting movement position.

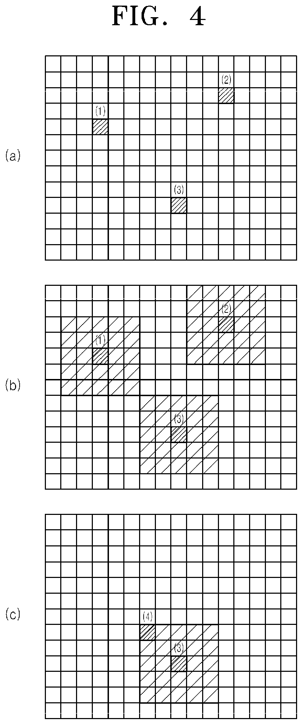

FIGS. 4A to 4C are views illustrating examples of preliminary block detection and secondary block detection according to an embodiment of the present invention.

FIG. 4A illustrates suspected blocks (1), (2), and (3), which have brightness values of a reference value or higher, detected by the preliminary block detection unit 131. An image of FIG. 4A is an image of a previous frame, and an area searched by the preliminary block detection unit 131 is that of the entire image.

FIG. 4B illustrates an image of a present frame. Blocks additionally processed in FIG. 4B are those blocks in areas in the image of the present frame, whose brightness values are calculated by the secondary block detection unit 132. The secondary block detection unit 132 detects a block whose brightness value is of the reference value or higher by calculating brightness values of blocks in areas adjacent to the suspected blocks detected by the preliminary block detection unit 131.

FIG. 4C illustrates a block (4) whose brightness value detected by the secondary block detection unit 132 is of the reference value or higher. Referring to FIG. 4C, there is only a block (3) having the block (4) whose brightness value is of the reference value or higher around it, as a result of secondarily detecting the areas of FIG. 4B. Accordingly, other blocks (1) and (2) may be determined as instant errors of the image or instant changes of brightness caused by surroundings thereof, and a real shooting position may be determined to be the block (3). Considering the result obtained by the detection of the secondary block detection unit 132, it may be known that a shooting position detected for a frame movement time is changed from a position of the block (3) to a position of the block (4). That is, the shooting position determination unit 140 determines the block (3) as a shooting start position and determines the block (4) as a shooting movement position.

Using correlation with the brightness of the previous image as described above may be used to compensate an error caused by a movement of an image.

Additionally, the search target determination unit 120 checks a viewing angle of a camera and determines a searching range to detect a flame in one frame according to the viewing angle. When the viewing angle is wide (causing the field of view of the camera to be wide), the searching range to detect the flame becomes narrower (i.e. the searching range is relatively smaller in the field of view). When the viewing angle is narrow (causing the field of view of the camera to be narrow), the searching range to detect the flame becomes wider (i.e. the searching range is relatively larger in the field of view).

In another embodiment of the present invention, the search target determination unit 120 may determine an error detection range to be wider than an original detection range. As described above, in the present embodiment, to precisely detect a shooting position, the preliminary block detection unit 131 detecting a previous brightness value and the secondary block detection unit 132 detecting a present brightness value are included. The search target determination unit 120 may determine a search range to be wider than an original secondary block detection range when the secondary block detection unit 132 detects a block whose brightness is a reference value or higher.

For example, it is checked whether a block whose brightness is a reference value or higher exists in an area two times of a range where secondary detection is performed. When the block whose brightness is the reference value or higher exists, it is determined that a movement error of an image occurs.

In more detail, the search target determination unit 120 determines a search range for detecting a flame within one frame according to a viewing angle.

The preliminary block detection unit 131 detects suspected blocks in a preliminarily detected previous frame, and the secondary block detection unit 132 detects a block whose brightness is a reference value or higher from the suspected blocks. In this case, when the movement error of the image occurs and the secondary block detection unit 132 is incapable of detecting a block whose brightness is a reference value or higher from the suspected blocks, the movement error of the image may occur due to rocking of a camera.

Accordingly, the error compensation detection unit 133 makes a search range twice the size of the detection size of the secondary block detection unit, and detects a block whose brightness is a reference value or higher from blocks outside the detection area of the secondary block detection unit in the image of the present frame, thus performing error compensation detection.

When it is determined that a present viewing angle of the camera is less than 7 degrees, the error compensation detection unit 133 does not additionally detect errors, and the shooting position determination unit 140 determines a central point of pixels detected by the preliminary detection and the secondary detection as a shooting position. When the present viewing angle is less than 7 degrees, since an original search range to detect a flame is wide, it is unnecessary to additionally perform error compensation.

When the present viewing angle is 7 degrees or more, the error compensation detection unit 133 makes a search range twice the size of the detection size of the secondary block detection unit and detects a pixel whose brightness is a reference value or higher from pixels outside the detection area of the secondary block detection unit in the image of the present frame, thus performing error compensation detection. Based on a rocking value of an image, the shooting position determination unit 140 registers the block detected by the error compensation detection unit 133 as a shooting position.

Finally, to compensate for an error caused by the rocking of the image, the shooting position determination unit 140 determines both pixels detected in preliminary search and pixels detected in secondary search as shooting positions and stores shooting position information, in consideration of a degree of the rocking of the image, in the database 200.

To compensate for the error caused by the rocking of the image, the shooting position determination unit 140 determines a shooting position in consideration of blocks detected by preliminary, secondary, and error compensation detections. When brightness is calculated for each pixel, the shooting position determination unit 140 may store group information of pixels whose brightness is a reference value or higher.

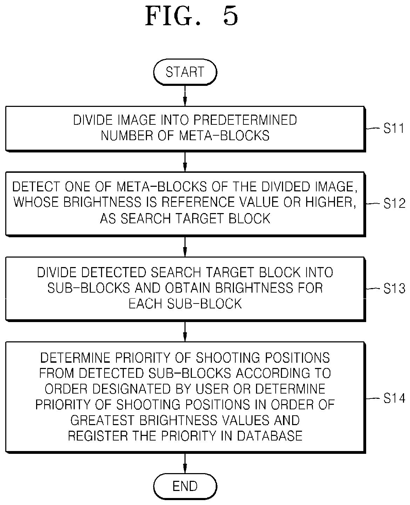

FIG. 5 is a flowchart illustrating a method of detecting a shooting position according to an embodiment of the present invention.

Referring to FIG. 5, an image is divided into a predetermined number of meta-blocks (S11). As an example, an image of a frame may be divided into 16×12 meta-blocks.

One whose brightness is a reference value or higher is detected from the meta-blocks of the divided image as a search target block (S12).

The detected search target block is divided into sub-blocks, and brightness of each sub-block is obtained (S13).

When determining priority of shooting positions from detected sub-blocks according to order, one with the highest brightness value among the sub-blocks is determined as a shooting position and registered in the database 200 (S14).

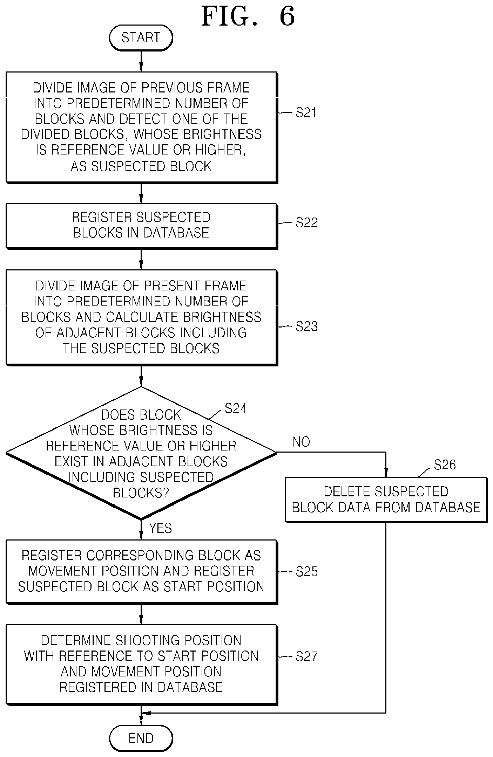

FIG. 6 is a flowchart illustrating a method of detecting a shooting position according to another embodiment of the present invention.

Referring to FIG. 6, an image of a previous frame is divided into a predetermined number of blocks, and blocks whose brightness is a reference value or higher is detected from the divided blocks as suspected blocks (S21).

The detected suspected blocks are registered in the database 200.

Next, an image of a present frame is also divided into a predetermined number of blocks (S23) and it is checked whether a block whose brightness is a reference value or higher exists in adjacent blocks including the suspected blocks (S24). In the present embodiment as shown in FIG. 4, it is checked whether a block whose brightness is a reference value or higher exists in a group of blocks within a range of two blocks from the suspected blocks.

Next, when a block whose brightness is the reference value or higher exists in the group of the blocks, the position of the corresponding block is registered as a movement position and the position of the suspected block is registered as a start position (S25). When a block whose brightness is the reference value or higher does not exist in the group of the blocks, the suspected block is deleted from the database 200.

A shooting position is determined by referring to the start position and the movement position registered in the database 200.

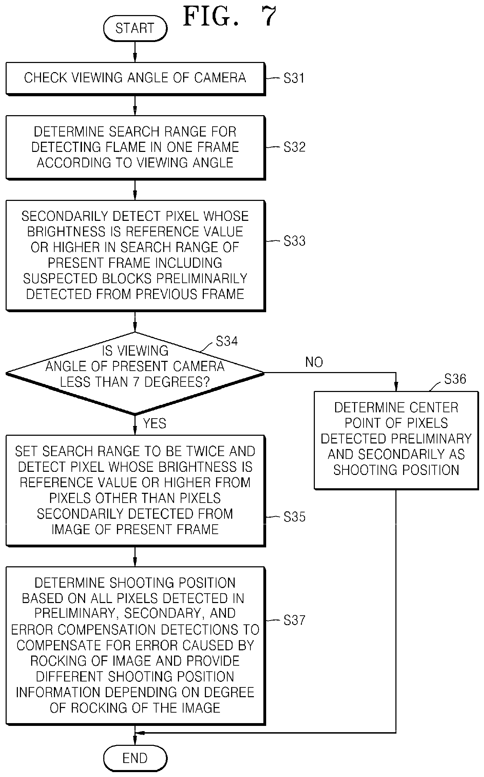

FIG. 7 is a flowchart illustrating a shooting position detection process for compensating for camera shake according to another embodiment of the present invention.

As described above, it is possible to detect brightness for each pixel instead of additionally determining blocks as described in the embodiment shown in FIG. 5. In the present embodiment shown in FIG. 7, it will be described based on pixels instead of blocks.

Referring to FIG. 7, a viewing angle of a camera is checked (S31).

A search range for detecting a flame in one frame is determined according to the viewing angle (S32).

Secondary detection is performed for detecting a pixel whose brightness is a reference value or higher in the search range of a present frame including suspected blocks preliminarily detected in a previous frame (S33). In this process, when a plurality of pixels detected in the preliminary and secondary detections are adjacent from one another, a central point of the adjacent pixels may be obtained and recorded in the database 200 and a size of a group of the detected pixels may be recorded in the database 200.

It is checked whether the viewing angle of the present camera is less than 7 degrees (S34). When the viewing angle is less than 7 degrees, the center point of the pixels detected in the preliminary and secondary detections is determined as a shooting position (S36).

When the viewing angle is 7 degrees or more, a search range twice the size of the secondary detection is set, and a pixel whose brightness is the reference value or higher is detected in the pixels outside the pixels of the secondary detection area of the image of the present frame, and thus an error compensation detection process is performed (S35). Pixels detected in the error compensation detection process are recorded in the database, and a size of a group of the detected pixels may be recorded in the database 200.

A shooting position is determined based on all of the pixels detected in the preliminary, secondary, and error compensation detections to compensate for an error caused by rocking of the image, and shooting position information is provided differently depending on a degree of the rocking of the image (S37).

Specific executions described herein are merely examples and do not limit the scope of the present invention in any way. For simplicity of description, other functional aspects of conventional electronic configurations, control systems, software and the systems may be omitted. Furthermore, line connections or connection members between elements depicted in the drawings represent functional connections and/or physical or circuit connections by way of example, and in actual applications, they may be replaced or embodied as various additional functional connections, physical connections or circuit connections. Also, the described elements may not be inevitably required elements for the application of the present invention unless they are specifically mentioned as being "essential" or "critical."

According to an embodiment of the present invention, a system may detect a position having brightness of a reference value or higher from an image as a shooting position and, particularly, may detect the shooting position based on a brightness correlation between a present frame and a previous frame by considering a case in which the shooting position changes, thereby more precisely detecting the shooting position.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A detection system (100) for determining the shooting position of a gun, the detection system comprising:
a block determination unit (110) dividing an image of a previous frame and an image of a present frame into a predetermined number of blocks;
a first block detection unit (131) detecting a suspected block whose brightness is a reference value or higher from the image of the previous frame;
a second block detection unit (132) determining a group comprising a plurality of blocks including the detected suspected block from the image of the present frame and checking whether a block whose brightness is a reference value or higher exists in the group comprising a plurality of blocks; and
a shooting position determination unit (140) determining the block whose brightness is the reference value or higher, detected by the second block detection unit, as a shooting position.

2. The shooting position detection system of claim 1, wherein, when there are a plurality of shooting positions, the shooting position determination unit determines priority of the shooting positions.

3. The shooting position detection system of claim 2, wherein the shooting position determination unit determines the priority of the shooting positions in order of brightness values detected by the second block detection unit.

4. The shooting position detection system of claim 1, further comprising an error compensation detection unit (132) designating a block area outside of an area including the group comprising a plurality of blocks from the image of the present frame as an error block area and checking whether another block whose brightness is the reference value or higher exists in the error block area.

5. The shooting position detection system of claim 4, wherein when a viewing angle of the present image is 7 degrees or more, the error compensation detection unit determines that there is camera shake when the block whose brightness is the reference value or higher exists in the error block area.

6. The shooting position detection system of claim 1, wherein the block determination unit comprises, for the dividing of the image of the previous frame and the image of the present frame into the predetermined number of blocks:
a meta-block determination unit (111) dividing the image into a predetermined number of meta-blocks; and
a sub-block determination unit (112) dividing a certain one of the meta-blocks into a predetermined number of sub-blocks.

7. The shooting position detection system of claim 6, wherein the block whose brightness is a reference value or higher is one of the sub-blocks.

8. The shooting position detection system of claim 1, wherein, when there are a plurality of shooting positions, the shooting position determination unit determines priority of the shooting positions.

9. A method of detecting a shooting position of a gun, the method comprising:
dividing an image of a previous frame and an image of a present frame into a predetermined number of blocks;
detecting a suspected block whose brightness is a reference value or higher from the image of a previous frame;
determining a group comprising a plurality of blocks including the detected suspected block in the image of a present frame and checking whether a block whose brightness is a reference value or higher exists in the group comprising a plurality of blocks; and
determining the block whose brightness is the reference value or higher as the shooting position.

10. The method of claim 9, wherein, in the step of determining the shooting position, when there are a plurality of shooting positions, priority of the shooting positions is determined.

11. The method of claim 10, wherein, in the step of determining the shooting position, the priority of the shooting positions is determined in order of brightness values detected by the secondary block detection unit.

12. The method of claim 9, further comprising designating a block area outside of an area including the group comprising a plurality of blocks in the image of the present frame as an error block area and checking whether a block whose brightness is a reference value or higher exists in the error block area.

13. The method of claim 12, wherein, when the viewing angle of the present image is 7 degrees or more, in the step of designating the block area as the error block area, it is determined that there is camera shake when the block whose brightness is the reference value or higher exists in the error block area.

14. The method of claim 9, wherein the step of dividing the image into the predetermined number of blocks comprises:
dividing the image into a predetermined number of meta-blocks; and
dividing a certain one of the meta-blocks into a predetermined number of sub-blocks.

15. The method of claim 9, wherein, in the step of determining the shooting position, when there are a plurality of shooting positions, priority of the shooting positions is determined.

## Patentansprüche

1. Nachweissystem (100) zum Bestimmen der Schussposition einer Waffe, wobei das Nachweissystem Folgendes umfasst:
eine Blockbestimmungseinheit (110), die ein Bild eines vorherigen Rasters und ein Bild eines aktuellen Rasters in eine vorbestimmte Anzahl von Blöcken unterteilt;
eine erste Blocknachweiseinheit (131), die einen vermuteten Block nachgewiesen, dessen Helligkeit ein Referenzwert oder höher aus dem Bild des vorherigen Rasters ist;
eine zweite Blocknachweiseinheit (132), die eine Gruppe bestimmt, die eine Vielzahl von Blöcken einschließt, die den nachgewiesenen vermuteten Block aus dem Bild des aktuellen Rasters einschließen, und prüft, ob ein Block, dessen Helligkeit ein Referenzwert oder höher ist, in der Gruppe, die eine Vielzahl von Blöcken umfasst, existiert; und
eine Schusspositionsbestimmungseinheit (140), die den Block bestimmt, dessen Helligkeit der Referenzwert oder höher ist, der von der zweiten Blocknachweiseinheit nachgewiesen wird, als Schussposition.

2. Schusspositionsnachweissystem nach Anspruch 1, wobei, wenn es eine Vielzahl von Schusspositionen gibt, die Schusspositionsbestimmungseinheit die Priorität der Schusspositionen bestimmt.

3. Schusspositionsnachweissystem nach Anspruch 2, wobei die Schusspositionsbestimmungseinheit die Priorität der Schusspositionen in der Reihenfolge der von der zweiten Blocknachweiseinheit nachgewiesenen Helligkeitswerte bestimmt.

4. Schusspositionsnachweissystem nach Anspruch 1, ferner umfassend eine Fehlerkompensationsnachweiseinheit (132), die einen Blockbereich außerhalb eines Bereichs bezeichnet, der die Gruppe mit einer Vielzahl von Blöcken aus dem Bild des aktuellen Rasters als Fehlerblockbereich umfasst und die überprüft, ob ein anderer Block, dessen Helligkeit der Referenzwert oder höher ist, im Fehlerblockbereich existiert.

5. Schusspositionsnachweissystem nach Anspruch 4, wobei, wenn ein Betrachtungswinkel des aktuellen Bildes 7 Grad oder mehr beträgt, die Fehlerkompensationsnachweisein-heit bestimmt, dass eine Kameraverwacklung vorliegt, wenn der Block, dessen Helligkeit der Referenzwert oder höher ist, im Fehlerblockbereich existiert.

6. Schusspositionsnachweissystem nach Anspruch 1, wobei die Blockbestimmungseinheit zum Unterteilen des Bildes des vorherigen Rasters und des Bildes des aktuellen Rasters in die vorbestimmte Anzahl von Blöcken Folgendes umfasst:
eine Metablockbestimmungseinheit (111), die das Bild in eine vorbestimmte Anzahl von Metablöcken unterteilt; und
eine Teilblock-Bestimmungseinheit (112), die einen bestimmten der Meta-Blöcke in eine vorbestimmte Anzahl von Teilblöcken unterteilt.

7. Schusspositionsnachweissystem nach Anspruch 6, wobei der Block, dessen Helligkeit ein Referenzwert oder höher ist, einer der Teilblöcke ist.

8. Schusspositionsnachweissystem nach Anspruch 1, wobei, wenn eine Vielzahl von Schusspositionen vorliegt, die Schusspositionsbestimmungseinheit die Priorität der Schusspositionen bestimmt.

9. Verfahren zur Detektion einer Schussposition einer Waffe, wobei das Verfahren umfasst:
Unterteilen eines Bildes eines vorherigen Rasters und eines Bildes eines aktuellen Rasters in eine vorbestimmte Anzahl von Blöcken;
Detektieren eines vermuteten Blocks, dessen Helligkeit ein Referenzwert oder höher ist, aus dem Bild eines vorherigen Bildes;
Bestimmen einer Gruppe, die eine Vielzahl von Blöcken umfasst, darunter der nachgewiesene vermuteten Block in dem Bild eines aktuellen Rasters, und Überprüfen, ob ein Block, dessen Helligkeit ein Referenzwert oder höher ist, in der Gruppe, die eine Vielzahl von Blöcken umfasst, existiert; und
Bestimmen des Blocks, dessen Helligkeit der Referenzwert oder höher ist, als die Schussposition.

10. Verfahren nach Anspruch 9, wobei in dem Schritt des Bestimmens der Schussposition, wenn eine Vielzahl von Schusspositionen vorliegt, die Priorität der Schusspositionen bestimmt wird.

11. Verfahren nach Anspruch 10, wobei in dem Schritt des Bestimmens der Schussposition die Priorität der Schusspositionen in der Reihenfolge der von der sekundären Blockerfassungseinheit nachgewiesenen Helligkeitswerte bestimmt wird.

12. Verfahren nach Anspruch 9, ferner umfassend das Bezeichnen eines Blockbereichs außerhalb eines Bereichs, der die Gruppe einschließt, die eine Vielzahl von Blöcken in dem Bild des aktuellen Rasters umfasst, als Fehlerblockbereich, und das Prüfen, ob ein Block, dessen Helligkeit ein Referenzwert oder höher ist, in dem Fehlerblockbereich vorhanden ist.

13. Verfahren nach Anspruch 12, wobei, wenn der Betrachtungswinkel des aktuellen Bildes 7 Grad oder mehr beträgt, in dem Schritt des Bezeichnens des Blockbereichs als Fehlerblockbereich bestimmt wird, dass eine Kameraverwacklung vorliegt, wenn der Block, dessen Helligkeit der Referenzwert oder höher ist, in dem Fehlerblockbereich existiert.

14. Verfahren nach Anspruch 9, wobei der Schritt des Teilens des Bildes in die vorbestimmte Anzahl von Blöcken Folgendes umfasst: Unterteilen des Bildes in eine vorgegebene Anzahl von Metablöcken; und Unterteilen eines bestimmten der Metablöcke in eine vorgegebene Anzahl von Teilblöcken.

15. Verfahren nach Anspruch 9, wobei in dem Schritt des Bestimmens der Schussposition, wenn eine Vielzahl von Schusspositionen vorliegt, die Priorität der Schusspositionen bestimmt wird.

## Revendications

1. Système de détection (100) destiné à déterminer la position de tir d'une arme à feu, le système de détection comprenant :
une unité de détermination de bloc (110) divisant une image d'une trame précédente et une image d'une trame en cours en un nombre prédéterminé de blocs ;
une première unité de détection de bloc (131) détectant un bloc suspect dont la luminosité correspond à une valeur de référence, ou à une valeur supérieure, à partir de l'image de la trame précédente ;
une seconde unité de détection de bloc (132) déterminant un groupe comprenant une pluralité de blocs incluant le bloc suspect détecté à partir de l'image de la trame en cours et vérifiant si un bloc dont la luminosité correspond à une valeur de référence ou à une valeur supérieure existe dans le groupe comprenant une pluralité de blocs ; et
une unité de détermination de position de tir (140) déterminant le bloc dont la luminosité correspond à la valeur de référence ou à la valeur supérieure, détecté par la seconde unité de détection de bloc, comme étant une position de tir.

2. Système de détection de position de tir selon la revendication 1, dans lequel, lorsqu'il existe une pluralité de positions de tir, l'unité de détermination de position de tir détermine une priorité des positions de tir.

3. Système de détection de position de tir selon la revendication 2, dans lequel l'unité de détermination de position de tir détermine la priorité des positions de tir selon l'ordre des valeurs de luminosité détectées par la seconde unité de détection de bloc.

4. Système de détection de position de tir selon la revendication 1, comprenant en outre une unité de détection de compensation d'erreur (132) désignant une zone de blocs à l'extérieur d'une zone incluant le groupe comprenant une pluralité de blocs à partir de l'image de la trame en cours en tant qu'une zone de blocs d'erreur, et vérifiant si un autre bloc dont la luminosité correspond à la valeur de référence ou à la valeur supérieure existe dans la zone de blocs d'erreur.

5. Système de détection de position de tir selon la revendication 4, dans lequel, lorsqu'un angle de vision de l'image en cours est de 7 degrés ou plus, l'unité de détection de compensation d'erreur détermine qu'il existe un tremblement de caméra lorsque le bloc dont la luminosité correspond à la valeur de référence ou à la valeur supérieure existe dans la zone de blocs d'erreur.

6. Système de détection de position de tir selon la revendication 1, dans lequel l'unité de détermination de bloc comprend, dans le cadre de l'étape de division de l'image de la trame précédente et de l'image de la trame en cours en le nombre prédéterminé de blocs :
une unité de détermination de métablocs (111) divisant l'image en un nombre prédéterminé de métablocs ; et
une unité de détermination de sous-blocs (112) divisant un métabloc donné des métablocs en un nombre prédéterminé de sous-blocs.

7. Système de détection de position de tir selon la revendication 6, dans lequel le bloc dont la luminosité correspond à une valeur de référence ou à une valeur supérieure est l'un des sous-blocs.

8. Système de détection de position de tir selon la revendication 1, dans lequel, lorsqu'il existe une pluralité de positions de tir, l'unité de détermination de position de tir détermine une priorité des positions de tir.

9. Procédé de détection d'une position de tir d'une arme à feu, le procédé comprenant les étapes ci-dessous consistant à :
diviser une image d'une trame précédente et une image d'une trame en cours en un nombre prédéterminé de blocs ;
détecter un bloc suspect dont la luminosité correspond à une valeur de référence, ou à une valeur supérieure, à partir de l'image de la trame précédente ;
déterminer un groupe comprenant une pluralité de blocs incluant le bloc suspect détecté à partir de l'image de la trame en cours et vérifier si un bloc dont la luminosité correspond à une valeur de référence ou à une valeur supérieure existe dans le groupe comprenant une pluralité de blocs ; et
déterminer le bloc dont la luminosité correspond à la valeur de référence ou à la valeur supérieure, détecté par la seconde unité de détection de bloc, comme étant une position de tir.

10. Procédé selon la revendication 9, dans lequel, à l'étape de détermination de la position de tir, lorsqu'il existe une pluralité de positions de tir, une priorité des positions de tir est déterminée.

11. Procédé selon la revendication 10, dans lequel, à l'étape de détermination de la position de tir, la priorité des positions de tir est déterminée selon l'ordre de valeurs de luminosité détectées par la seconde unité de détection de bloc.

12. Procédé selon la revendication 9, comprenant en outre l'étape consistant à désigner une zone de blocs à l'extérieur d'une zone incluant le groupe comprenant une pluralité de blocs dans l'image de la trame en cours, en tant qu'une zone de blocs d'erreur, et l'étape consistant à vérifier si un bloc dont la luminosité correspond à une valeur de référence ou à une valeur supérieure existe dans la zone de blocs d'erreur.

13. Procédé selon la revendication 12, dans lequel, lorsque l'angle de vision de l'image en cours est de 7 degrés ou plus, à l'étape de désignation de la zone de blocs en tant que la zone de blocs d'erreur, il est déterminé qu'il existe un tremblement de caméra lorsque le bloc dont la luminosité correspond à la valeur de référence ou à la valeur supérieure existe dans la zone de blocs d'erreur.

14. Procédé selon la revendication 9, dans lequel l'étape de division de l'image en le nombre prédéterminé de blocs comprend les étapes ci-dessous consistant à :
diviser l'image en un nombre prédéterminé de métablocs ; et
diviser un métabloc donné des métablocs en un nombre prédéterminé de sous-blocs.

15. Procédé selon la revendication 9, dans lequel, à l'étape de détermination de la position de tir, lorsqu'il existe une pluralité de positions de tir, une priorité des positions de tir est déterminée.
